# EUROPÄISCHE PATENTANMELDUNG

(11) **EP 3 176 206 A1**
(43) Veröffentlichungstag der Anmeldung: **07.06.2017**
(21) Anmeldenummer: 15197177.7
(22) Anmeldetag: 01.12.2015
(51) Int. Cl.: C08J 9/00, C08J 9/14

(54) **VERFAHREN ZUR HERSTELLUNG FEINZELLIGER SCHAUMSTOFFE UNTER VERWENDUNG EINES ZELLALTERUNGSHEMMERS**

(71) Anmelder: Evonik Degussa GmbH, 45128 Essen (DE)
(72) Erfinder: KLOSTERMANN, Michael, 45239 Essen (DE); SCHILLER, Carsten, 40885 Ratingen (DE); VENZMER, Joachim, 45239 Essen (DE); EILBRACHT, Christian, 44627 Heme (DE)

(57) **Zusammenfassung**

Ein Verfahren zur Herstellung von Polymerschäumen aus flüssigen Reaktionsmischungen, vorzugsweise Polyurethan-Schaum, insbesondere Polyurethan-Hartschaum, in Gegenwart eines Zusatzstoffes zur Verlangsamung der Zellalterung, insbesondere zur Verlangsamung jener Zellalterung, welche nicht durch Koaleszenz, sondern durch Ostwald-Reifung verursacht wird, wird beschrieben.

## Beschreibung

Die vorliegende Erfindung liegt auf dem Gebiet der Schaumstoffe, vorzugsweise Polyurethanschaumstoffe.

Schaumstoffe, insbesondere Polymerschäume, sind eine Werkstoffklasse, welche in großem Umfang und in diversen Anwendungen Einsatz findet. Die Morphologie ("Zellstruktur") spielt dabei für die Gebrauchseigenschaften meist eine entscheidende Rolle. Eine gezielte Beeinflussung der Zellstruktur bei der Herstellung der Schaumstoffe ermöglicht die Anpassung der Eigenschaften an die jeweiligen Anforderungen.

Die Ausbildung einer Schaumstruktur erfolgt durch die Bildung eines Gases (z.B. durch Verdampfung eines Treibmittels) in der noch flüssigen Matrix - bei Polymerschäumen meist eine Schmelze eines thermoplastischen Polymers oder eine Reaktionsmischung aus monomeren bzw. oligomeren Rohstoffen, die unter Vernetzung aushärtet - und Austritt des Gases aus der flüssigen Phase unter Ausbildung von Schaumblasen ("Zellen"). Dieser Verschäumungsprozess lässt sich grob in drei Schritte umfassend die Nukleierung des Treibmittels zu Zell-Keimen, das Wachstum der Zell-Keime zu tatsächlichen Schaumzellen sowie die Alterung der Schaumzellen unterteilen. Unter Nukleierung versteht man im Allgemeinen das Freisetzen kleinster, feinstverteilter Gasbläschen in die flüssige Matrix. Im Gegensatz hierzu versteht man unter dem Zellwachstum das Anschwellen von bereits vorhandenen Schaumzellen durch eindiffundieren von in der Schaumatrix gelöstem Treibmittel. Zellalterung wiederum beschreibt eine Veränderung der Zellgröße und/oder Zellzahl durch Interaktion zweier oder mehrerer Zellen. Zellalterung kann hierbei zum einen durch direktes Verschmelzen zweier oder mehrerer Zellen erfolgen. Dieses Phänomen wird auch Koaleszenz genannt. Zum anderen kann Zellalterung durch sogenannte Ostwald-Reifung erfolgen. Diese erfolgt nicht durch direktes Verschmelzen zweier oder mehrerer Zellen, sondern geht einher mit einer Zellgasdiffusion von kleinen in Richtung größere Blasen, wodurch kleinere Gasblasen langsam schrumpfen während größere Gasblasen anwachsen. Dieser Prozess läuft gewöhnlich so lange ab, bis die kleineren Gasblasen letztendlich verschwunden sind. Bei der Herstellung von Schaumstoffen stoppt die Zellalterung jedoch durch das Erstarren der ehemals flüssigen Matrix, z.B. durch Abkühlen der Schmelze oder chemische Vernetzung einer Reaktionsmischung.

Die vorgenannten Schritte müssen nicht zwangsweise sequenziell ablaufen, sondern können auch zumindest teilweise zeitgleich stattfinden. So ist vor allem das Wachstum der Schaumzellen oftmals mit einer zeitgleichen Zellalterung verbunden. Eigenschaften des gebildeten Schaums wie z.B. mittlere Zellgröße, Zellgrößenverteilung oder Zelldichte werden maßgeblich durch ein Zusammenspiel der oben genannten Schritte beeinflusst. So wird beispielsweise die Zelldichte des Schaums von der Anzahl der initialen Zell-Keime sowie der Alterung der hieraus gebildeten Schaumzellen bestimmt, während die Größe der Zellen in erster Linie von der Zellwachstumsrate sowie der Zellalterung abhängt.

Ein wichtiges Einsatzgebiet von Schaumstoffen ist deren als Verwendung Isolationsmaterial, insbesondere zur Wärmedämmung. Zur Herstellung möglichst effektiver Isolierschaumstoffe ist es zweckmäßig, Schäume mit relativ niedrigem Raumgewicht von < 100 kg/m³ und - als wesentlichem Kriterium - möglichst vielen kleinen geschlossenen Zellen (hohe Zelldichte) zu erzeugen. Je feinzelliger der Schaumstoff ist, desto niedriger ist seine Wärmeleitfähigkeit, d.h. desto besser ist sein Isolationsvermögen.

Die zu lösende Aufgabe der vorliegenden Erfindung liegt daher in der Bereitstellung besonders feinzelliger Schaumstoffe, vorzugsweise besonders feinzelliger Polyurethan-Schaumstoffe mit einer durchschnittlichen Zellgröße bevorzugt unter 0,2 mm, insbesondere feinzelliger Polyurethan-Hartschaumstoffe mit einer durchschnittlichen Zellgröße bevorzugt unter 0,2 mm.

Im Rahmen der vorliegenden Erfindungen konnte überraschenderweise gefunden werden, dass eine Verlangsamung der Zellalterung, insbesondere eine Verlangsamung der Zellalterung verursacht durch Ostwald-Reifung, die Bereitstellung besonders feinzelliger Schaumstoffe ermöglicht, insbesondere mit Blick auf Polyurethanschäume, bevorzugt Polyurethan-Hartschaumstoffe.

Gegenstand der vorliegenden Erfindung ist ein Verfahren zur Herstellung von Polymerschäumen, insbesondere Polyurethan-Schaum, insbesondere Polyurethan-Hartschaum aus flüssigen Reaktionsmischungen, wobei das Verfahren in Gegenwart eines Zusatzstoffes zur Verlangsamung der Zellalterung, insbesondere Verlangsamung jener Zellalterung, welche nicht durch Koaleszenz, sondern durch Ostwald-Reifung (also Schrumpfen und Verschwinden kleiner Zellen ohne Koaleszenz) verursacht wird, durchgeführt wird.

Der Begriff der "flüssigen" Reaktionsmischungen umfasst alle Stoffe und Stoffgemische im flüssigen Aggregatzustand, hierzu gehören insbesondere auch Schmelzen und Emulsionen.

Bei Polyurethanschäumen handelt es sich um Schaumstoffe, welche durch Umsetzung von Polyisocyanaten mit ihnen gegenüber reaktiven Verbindungen, bevorzugt mit OH-Gruppen ("Polyole") und/oder NH-Gruppen, in Gegenwart von chemischen (z.B. Wasser, welches mit Isocyant unter Bildung von Kohlendioxid reagiert) und/oder physikalischen Treibmitteln (z.B. leichtflüchtige Alkane wie n-Pentan oder Cylcopentan oder halogenierte Kohlenwasserstoffe) sowie in der Regel Schaumstabilisatoren, Katalysatoren und ggf. anderen Zusatzmitteln gebildet werden. Polyurethanschäume können entweder elastisch ("Weichschäume") oder auch hart ("Hartschäume") sein. Und werden entsprechend ihrer variablen mechanischen Eigenschaften für eine Vielzahl unterschiedliche Anwendungen eingesetzt. Ein großes Einsatzgebiet, insbesondere von Polyurethan-Hartschäumen, ist die Wärmedämmung. Wie oben dargelegt sind hierfür besonders feinzellige Schäume von Vorteil.

Die vorliegende Erfindung eröffnet insbesondere einen Zugang zu noch feinzelligeren und damit noch besser isolierenden PUR-Hartschäumen. Die resultierenden Polyurethan-Schaumstoffe weisen vorzugsweise eine durchschnittliche Zellgröße bevorzugt unter 0,2 mm auf. Zur Bestimmung der durchschnittlichen Zellgröße wird in einem repräsentativen Schaumstoffbereich in radialer Richtung die auf einer Länge von 10 mm anfallende Anzahl der Zellen gezählt. Die Messstrecke dividiert durch die Anzahl der Zellen ergibt die durchschnittliche Zellgröße.

Um das Ausmaß an Zellalterung zu quantifizieren, wird im Rahmen dieser Erfindung vorzugsweise die normierte Alterungsrate *k*ₙₒᵣₘ herangezogen.

Es entspricht einer bevorzugten Ausführungsform der Erfindung, wenn in dem erfindungsgemäßen Verfahren die normierte Alterungsrate *k*ₙₒᵣₘ, bestimmbar wie nachfolgend beschrieben, ≤ 1,0 x 10⁻³ mm²/s, bevorzugt ≤ 0,9 x 10⁻³ mm²/s, besonders bevorzugt ≤ 0,8 x 10⁻³ mm²/s, beträgt. Eine mögliche Untergrenze liegt bei k ≥ 0, vorzugsweise k ≥ 0,1 x10⁻⁵, insbesondere ≥ 0,1 x10⁻⁴.

Zur Bestimmung der normierten Alterungsrate *k*ₙₒᵣₘ wird wie folgt vorgegangen.

In der noch unveröffentlichten europäischen Patentanmeldung EP15196930.0 wird eine videomikroskopische Methode zur Beobachtung von Zellwachstum und Zellalterung bei Schaumbildungsvorgängen im Detail beschrieben. Auf diese noch unveröffentlichte europäische Patentanmeldung EP15196930.0 wird hiermit vollumfänglich verwiesen und ihr gesamter Offenbarungsgehalt wird hiermit in die vorliegende Beschreibung inkludiert. Videomikroskopische Methoden zur Beobachtung von Zellwachstum und Zellalterung bei Schaumbildungsvorgängen, insbesondere die in der noch unveröffentlichten europäischen Patentanmeldung EP15196930.0 genannte, ermöglichen die Bestimmung der normierten Alterungsrate *k*ₙₒᵣₘ im Sinne der vorliegenden Erfindung. Deren Grundzüge sind nachfolgend zusammengefasst.

Diese Methode basiert auf der videomikroskopischen Betrachtung von Schaumbildungsprozessen über einen definierten kontinuierlichen Zeitraum, der vorzugsweise möglichst früh beginnen (insbesondere direkt nach dem Austritt der schäumenden Masse aus der Verschäumungsmaschine) und vorzugsweise bis in den zeitlich nicht weiter veränderlichen Bereich (ausgehärteten Schaum) hineinreichen sollte. Hierbei ist es möglich, zeitliche Veränderungen von Zellstrukturen zu beobachten. Da Alterungsphänomene in der Regel durch Interaktion zweier oder mehrerer Zellen auftreten, wird die zeitliche Veränderung eines ausreichend großen Zellkollektivs untersucht. Um die zeitlichen Veränderungen in einem Zellkollektiv mit ausreichender Genauigkeit verfolgen zu können, muß die Bildwiederholrate der Videoaufnahme so hoch sein, dass die Veränderungen von Lage und Größe der Zellen von Einzelbild zu Einzelbild klein gegenüber dem Zelldurchmesser ist. Dadurch wird es möglich, Zellen eindeutig zu identifizieren und ihre Eigenschaften zu verschiedenen Zeiten des Schaumbildungsprozesses zu bestimmen. Die Zellalterung wird durch Verfolgung der zeitlichen Abnahme der Zellanzahl in einem definierten Zellkollektiv erfasst. Der Begriff Zellkollektiv meint eine Gruppe von mehreren Zellen, die räumlich benachbart sind und videomikroskopisch erfassbar sind. Das Zellkollektiv kann insbesondere eine Zellpopulation innerhalb eines bestimmten räumlichen Bereiches sein. Dieser Bereich kann entweder fix gewählt werden, also beispielsweise der komplette Bildausschnitt bzw. ein räumlich fixer Teil davon, oder er kann der räumlichen Bewegung und Expansionen der schäumenden Masse folgen, was im Sinne dieser Erfindung bevorzugt ist. Um eine vorteilhafte Statistik der Beobachtung zu erzielen ist es im Rahmen der vorliegenden Erfindung bevorzugt, ein Zellkollektiv mit mindestens 20, bevorzugt mindestens 30, insbesondere bevorzugt mindestens 40 Zellen zu beobachten.

Zur Ermittlung der zeitlichen Abnahme der Zellzahl wird hierfür die videomikroskopische Beobachtung des Schaumbildungsprozesses in regelmäßigen zeitlichen Intervallen in Einzelbilder zerlegt. Anschließend wird in jedem dieser Einzelbilder ein einheitlicher Bereich definiert, in welchem die Zellalterung betrachtet wird. Dabei muss der Bereich an die räumliche Bewegung und Expansion des beobachteten Zellkollektivs angepasst werden, was durch ein "schwimmendes Betrachtungsfenster" erreicht wird. Dazu werden Zellen identifiziert, die als Eckpunkte ein Polygon aufspannen. Alle Zellen innerhalb der Grenzen des Polygons werden zur Auswertung herangezogen. Hierbei ist darauf zu achten, dass diese Eckzellen in allen beobachteten Einzelbildern auftauchen. Das von diesen Zellen aufgespannte Polygon verändert sich somit von Bild zu Bild. Es kann vorteilhaft sein, wenn für die Identifikation der "Eck-Zellen" in den Einzelbildern die zeitlich dazwischen liegenden Video-Sequenzen betrachtet werden. Bei stark expandierenden Schäumen kann es vorteilhaft sein, das schwimmende Auswertefenster in dem Einzelbild am Ende des Auswertezeitraumes festzulegen und dann Einzelbild für Einzelbild rückwärts in der Zeit die Eck-Zellen zu identifizieren. So kann vermieden werden, dass die Grenzen des Fensters aus dem Bildausschnitt herauswandern. Die Zellanzahl in der Beobachtungsfläche zu den jeweiligen Zeitpunkten lässt sich nun durch Abzählen der Zellen ermitteln. Um bei unterschiedlichen Schäumen eine Vergleichbarkeit der so ermittelten Zellzahlen zu gewährleisten, werden die Zellzahlen auf die Größe der Beobachtungsfläche des letzten Einzelbildes (repräsentiert den ausgehärteten Schaum) normiert. Eine anschließende Auftragung der normierten Zellanzahl in Abhängigkeit der Zeit ermöglicht quantitative Aussagen über die Zellalterung. Parallel zu dieser Betrachtung lässt sich durch qualitative Beurteilung des videomikroskopisch festgehaltenen Schaumbildungsprozesses feststellen, ob Alterungsphänomene auf Koaleszenz (also Verschmelzen zweier oder mehrerer Zellen) oder Ostwald-Reifung (also Schrumpfen kleiner Zellen) beruhen.

Im Rahmen der vorliegenden Erfindung wurde die in der bereits genannten europäischen Patentanmeldung EP15196930.0 beschriebene Videomikroskopie-Methode um eine mathematische Auswertung zur Quantifizierung der Zellalterung ergänzt:
Erfindungsgemäß bevorzugt ist hierbei die Modellierung der Daten mittels einer e-Funktion der allgemeinen Form *N*(*t*) = (*N*₀-*N*ᵤ)e^{-*kt*} + *N*ᵤ, wobei *N*(*t*) die normierte Zellzahl zum Zeitpunkt *t*, *N*ₒ die normierte initiale Zellzahl zum Zeitpunkt *t* = 0, *N*ᵤ die normierte Zellzahl im ausgehärteten Schaum für *t* → ∞ und *k* die Alterungsrate ist. Erfindungsgemäß bevorzugt werden die normierten Zellzahlen *N*ₜ, No und *N*ᵤ pro Quadratmillimeter (1/mm²) angegeben, die bevorzugte physikalische Einheit der Alterungsrate *k* ist 1/Sekunde (1/s).

Die Wirksamkeit von Maßnahmen zur Unterbindung von Alterungsphänomenen spiegelt sich hierbei zum einen in der Alterungsrate k wieder, welche direkt mit der Geschwindigkeit der Zellalterung verknüpft ist. Darüber hinaus bewirkt eine Verlangsamung bzw. Unterdrückung von Alterungsphänomenen einen Anstieg der normierten Zellzahl im ausgehärteten Schaum Nᵤ. Eine quantitative Bewertung der Wirksamkeit von Methoden zur Hinderung von Alterungsphänomenen ist somit über diese beiden Größen möglich. Im Rahmen der vorliegenden Erfindung wurde hierfür die auf *N*ᵤ normierte Alterungsrate *k*ₙₒᵣₘ *= k* / *N*ᵤ als Maß für die Wirksamkeit definiert. Die bevorzugte physikalische Einheit der normierten Alterungsrate *k*ₙₒᵣₘ ist hierbei Quadratmillimeter pro Sekunde (mm²/s).

Es konnte gefunden werden, dass bei der Herstellung von Polyurethan-Schäumen die Ostwald-Reifung für den Großteil der Zellalterung verantwortlich ist, während Zellkoaleszenz durch die bereits üblicherweise eingesetzten, individuell angepassten Schaumstabilisatoren auf ein kaum ins Gewicht fallendes Maß zurückgedrängt wird.

Um die erfindungsgemäß bevorzugten Alterungsraten zu erzielen, wird erfindungsgemäß ein Zusatzstoff zur Verlangsamung der Zellalterung, insbesondere zur Verlangsamung jener Zellalterung, welche nicht durch Koaleszenz, sondern durch Ostwald-Reifung verursacht wird, eingesetzt. Für Schäume sind solche Zusatzstoffe oder andere gezielte Maßnahmen zur Reduktion von Ostwald-Reifung bisher nicht beschrieben worden.

Der erfindungsgemäße Zusatzstoff zur Verlangsamung der Zellalterung, insbesondere Verlangsamung jener Zellalterung, welche nicht durch Koaleszenz, sondern durch Ostwald-Reifung verursacht wird, ermöglicht die Senkung der normierten Alterungsrate *k*ₙₒᵣₘ.

In einer bevorzugten Ausführungsform der Erfindung zeichnet sich das erfindungsgemäße Verfahren zur Herstellung von Schaumstoffen, insbesondere Polyurethan-Schaumstoffen (einschließlich Polyisocyanurat- und Polyharnstoff-basierten Schäumen, sowie deren Mischformen), dadurch aus, dass der erfindungsgemäße Zusatzstoff in einer Menge von maximal 5 Massen-%, bevorzugt maximal 3 Massen-%, besonders bevorzugt maximal 1,5 Massen-% bezogen auf die Gesamtmasse der Schaumstoff-Rezeptur (inklusive der Treibmittel), eingesetzt wird. Eine mögliche Untergrenze liegt vorzugsweise bei 0,1 Massen-%, insbesondere 0,2 Massen-%.

In einer weiteren bevorzugten Ausführungsform der Erfindung zeichnet sich das erfindungsgemäße Verfahren dadurch aus, dass die normierte Alterungsrate *k*ₙₒᵣₘ um mindestens 20 %, bevorzugt um mindestens 30 %, besonders bevorzugt um mindestens 40 %, gemessen gegenüber dem Wert von *k*ₙₒᵣₘ desselben Herstellverfahrens (analoge Rezeptur, gleiche Verschäumungsbedingungen) ohne Zusatz des erfindungsgemäßen Zusatzstoffes, reduziert wird. Eine mögliche Obergrenze liegt bei 100 %, vorzugsweise 90 %, insbesondere 80 %.

Bei dem erfindungsgemäßen Zusatzstoff handelt es sich bevorzugt um eine flüchtige Substanz mit einem Siedepunkt kleiner 150 °C, besonders bevorzugt kleiner 100 °C. Eine mögliche Untergrenze liegt bei vorzugsweise -30°C, insbesondere -20°C.

Als erfindungsgemäße Zusatzstoffe sind solche Substanzen bevorzugt, welche schlecht in der flüssigen Schaummatrix löslich sind. Schlecht löslich bedeutet insbesondere, dass solche Substanzen bei der verwendeten Einsatzkonzentration von maximal 5 Massen-%, bevorzugt maximal 3 Massen-%, besonders bevorzugt maximal 1,5 Massen-% zu einer mit dem Auge sichtbaren Trübung bzw. Phasenseparation führen. Im Falle von Schaumstoffen, die durch Verschäumung mehr-komponentiger Reaktivsysteme hergestellt werden, gilt dieses Kriterium unabhängig für alle Einzelkomponenten. Beispielsweise sollte der erfindungsgemäße Zusatzstoff im Falle eines Polyurethan-Systems bevorzugt sowohl im Polyol-Gemisch (A-Komponente) als auch im Isocyanat (B-Komponente) schlecht löslich sein. Solche Substanzen werden im Sinne dieser Erfindung als sogenannte Ostwald-Hydrophobe bezeichnet.

Beispiele für erfindungsgemäße Zusatzstoffe, welche zur Verlangsamung der Zellalterung, insbesondere zur Verlangsamung jener Zellalterung, welche nicht durch Koaleszenz, sondern durch Ostwald-Reifung verursacht wird, beitragen und folglich im Rahmen der vorliegenden Erfindung zu einer Reduzierung der Alterungsrate kₙₒᵣₘ verwendet werden können, sind hoch fluorierte Kohlenwasserstoffe, Ether und Ketone, bei denen mindestens 50 %, bevorzugt mindestens 80 %, besonders bevorzugt 100 % der Wasserstoffe durch Fluor-Atome ersetzt sind. Die Verbindungen können gesättigt oder ungesättigt, linear, verzweigt oder cyclisch sein.

Bevorzugte Substanzen im Rahmen der vorliegenden Erfindung sind perfluorierte Koh-lenwasserstoffe, besonders bevorzugt Perfluorpentan C₅F₁₂, Perfluorhexan C₆F₁₄, Perfluorcyclohexan C₆F₁₂, Perfluorheptan C₇F₁₆, Perfluoroctan C₈F₁₈, Olefine mit den Summenformeln C₅F₁₀, C₆F₁₂, C₇F₁₄ und/oder C₈F₁₆, ganz besonders bevorzugt das Dimere des 1,1,2,3,3,3-Hexafluor-1-propen, insbesondere 1,1,1,2,3,4,5,5,5-nonafluor-4-(trifluormethyl)pent-2-en oder 1,1,1,3,4,4,5,5,5-nonafluor-2-(trifluormethyl)pent-2-en und/oder Mischungen davon.

Weitere bevorzugte Substanzen sind Fluorkohlenwasserstoffe, besonders bevorzugt Olefine mit den Summenformeln C₄H₂F₆ (beispielsweise Hexafluorisobutylen), C₅H₂F₈, C₆H₂F₁₀, C₇H₂F₁₂ und/oder C₈H₂F₁₄, sowie Olefine mit der allgemeinen Formel

H₂C=CH-R^{F}

mit R^{F} gleich einem monovalenten, perfluorierten, gesättigten organischen Rest, bevorzugt -CF₃, -C₂F₅, -C₃F₇, -C₄F₉, -C₅F₁₁, -C₆F₁₃ und/oder -C₇F₁₅,

Weitere bevorzugte Substanzen sind Ether mit einem oder zwei perfluorierten Resten, besonders bevorzugt Verbindungen der allgemeinen Formel

R-O-R^{F}

mit R^{F} wie oben definiert, bevorzugt -C₃F₇, -C₄F₉, -C₅F₁₁, -C₆F₁₃ oder -C₇F₁₅,
R gleich einem monovalenten, gesättigten Kohlenwasserstoff-Rest, bevorzugt Methyl- oder EthylReste,
oder

R^{F}-O-CF=CF₂

mit R^{F} wie oben definiert, bevorzugt -CF₃ oder -C₂F₅

Weitere bevorzugte Substanzen sind Ketone mit zwei perfluorierten Resten, besonders bevorzugt 1,1,1,2,2,4,5,5,5-Nonafluoro-4-(trifluoromethyl)-3-pentanon.

Weitere Beispiele sind Silane und/oder Siloxane, welche Methyl- oder höhere Kohlenwasserstoff-Substituenten, vorzugsweise bis C3, tragen, die gesättigt oder ungesättigt, linear, verzweigt oder cyclisch, sowie nicht, teilweise oder vollständig halogeniert, insbesondere fluoriert, sein können.

Bevorzugte Substanzen im Rahmen der vorliegenden Erfindung sind Tetramethylsilan und davon abgeleitete Verbindungen der allgemeinen Formel

(CH₃)₃Si-R

mit R gleich -H, Ethyl-, Vinyl-, Allyl-, Chlormethyl-, Bromomethyl-, Methoxymethyl-, Trifluormethyl- oder Methoxy-.

Weitere bevorzugte Substanzen sind Hexamethyldisilan, Tetraethylsilan,Trifluormethyl-triethylsilan und/oder Trivinylsilan.

Weitere bevorzugte Substanzen sind Hexamethyldisiloxan und davon abgeleitete Verbindungen der allgemeinen Formel

R-(CH₃)₂Si-O-Si(CH₃)₂-R

mit R gleich -H, Ethyl-, Vinyl-, Allyl-, Chlormethyl-, Bromomethyl-, Methoxymethyl-, Trifluormethyl- oder Methoxy-.

Weitere bevorzugte Substanzen sind Octamethyltrisiloxan und/oder Heptamethyltrisiloxan (CH₃)₃Si-O-Si(CH₃)H-O-Si(CH₃)₃.

Die genannten Substanzen zur Verlangsamung von Alterungsphänomenen, insbesondere zur Verlangsamung jener Zellalterung, welche nicht durch Koaleszenz, sondern durch Ostwald-Reifung verursacht wird, können wahlweise einzeln aber auch in Kombination eingesetzt werden. Auch Mischungen dieser Substanzen mit anderen Stoffen, bevorzugt mit Treibmitteln, sind möglich. Bei solchen Mischungen kann es sich um Azeotrope handeln. Bekannt sind beispielsweise azeotrope Mischungen aus Ethern mit einem oder zwei perfluorierten Resten und 1,2-Dichlorethylen.

Eine bevorzugte Ausführungsform der vorliegenden Erfindung ist ein Verfahren zur Herstellung feinzelliger Polyurethanschäume mit einer durchschnittlichen Zellgröße bevorzugt unter 0,2 mm, besonders bevorzugt feinzelliger Polyurethan-Hartschäume mit einer durchschnittlichen Zellgröße bevorzugt unter 0,2 mm.

Neben dem erfindungsgemäßen Zusatzstoff zur Verlangsamung der Zellalterung, insbesondere zur Verlangsamung jener Zellalterung, welche nicht durch Koaleszenz, sondern durch Ostwald-Reifung verursacht wird, werden dabei bevorzugt die folgenden Rohstoffe verwendet.

### 1. Polyole.

Polyole zur Herstellung von Schaumstoffen, vorzugsweise PUR-Schaumstoffen sind an sich bekannt. Besonders geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (meist Phthalsäure oder Terephthalsäure) mit mehrwertigen Alkoholen (meist Glycolen). Entsprechend den geforderten Eigenschaften der Schäume werden entsprechende Polyole verwendet, wie beispielsweise beschrieben in: US 2007/0072951 A1, WO 2007/111828 A2, US 2007/0238800, US 6359022 B1 oder WO 96 12759 A2. Ebenso werden bevorzugt verwendbare Pflanzenöl-basierende Polyole in verschiedenen Patentschriften beschrieben, wie beispielsweise in der WO 2006/094227, WO 2004/096882, US 2002/0103091, WO 2006/116456 und EP 1 678 232.

### 2. Treibmittel.

Treibmittel zur Herstellung von Schaumstoffen, vorzugsweise PUR-Schaumstoffen sind an sich bekannt. Üblicherweise wird ein physikalisches Treibmittel verwendet, d.h. eine leichtflüchtige (Siedetemperatur kleiner 100 °C, vorzugsweise kleiner 70 °C) Flüssigkeit oder ein Gas. Geeignete physikalische Treibmittel im Sinne dieser Erfindung sind Gase, beispielsweise verflüssigtes CO2, und leichtflüchtige Flüssigkeiten, beispielsweise Kohlenwasserstoffe mit 3 bis 5 Kohlenstoff-Atomen, bevorzugt cyclo-, iso- und n-Pentan, Fluorkohlenwasserstoffe, bevorzugt HFC 245fa, HFC 134a und HFC 365mfc, HFO-1234zeE, HFO-1234yf, HFO-1336mzzZ und HFO-1336mzzE, Fluorchlorkohlenwasserstoffe, bevorzugt HCFC 141b und HFO-1233zd-E, sauerstoffhaltige Verbindungen wie Methylformiat und Dimethoxymethan, oder Chlorkohlenwasserstoffe, bevorzugt 1,2-Dichlorethan.

Die bevorzugten Einsatzmengen an physikalischem Treibmittel richten sich ganz nach der gewünschten Dichte des herzustellenden Schaumstoffes und liegen typischerweise im Bereich von 1 bis 40 Massenteilen bezogen auf 100 Massenteile Polyol.

Neben physikalischen Treibmitteln können auch chemische Treibmittel enthalten sein, die mit Isocyanaten unter Gasentwicklung reagieren, wie beispielsweise Wasser oder Ameisensäure.

### 3. Schaumstabilisatoren.

Schaumstabilisatoren zur Herstellung von Schaumstoffen, vorzugsweise PUR-Schaumstoffen sind an sich bekannt. Bevorzugte Schaumstabilisatoren sind oberflächenaktive Substanzen, bevorzugt Silicon-Tenside (Polyether-Polydimethylsiloxan-Copolymere). Typische Einsatzmengen an Polyethersiloxan-Schaumstabilisatoren liegen bei 0,5 bis 5 Massenteilen pro 100 Massenteile Polyol, bevorzugt bei 1 bis 3 Massenteilen pro 100 Massenteile Polyol. Geeignete Silicon-Tenside werden z. B. in EP 1873209, EP 1544235, DE 10 2004 001 408, EP 0839852, WO 2005/118668, US 20070072951, DE 2533074, EP 1537159 EP 533202, US 3933695, EP 0780414, DE 4239054, DE 4229402 und EP 867464 beschrieben und z. B. unter dem Markennamen Tegostab® von der Evonik Industries vertrieben. Die Herstellung der Siloxane kann wie im Stand der Technik beschrieben erfolgen. Besonders geeignete Beispiele zur Herstellung sind z. B. in US 4,147,847, EP 0493836 und US 4,855,379 beschrieben.

### 4. Katalysatoren.

Katalysatoren zur Herstellung von Schaumstoffen, vorzugsweise PUR-Schaumstoffen sind an sich bekannt. Besonders geeignete Katalysatoren im Sinne dieser Erfindung sind vorzugsweise Katalysatoren, die die Gelreaktion (Isocyanat-Polyol), die Treibreaktion (Isocyanat-Wasser) und/oder die Di- bzw. Trimerisierung des Isocyanats katalysieren. Typische Beispiele für geeignete Katalysatoren sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat und Kalium-2-ethylhexanoat. Geeignete Katalysatoren sind beispielsweise in EP 1985642, EP 1985644, EP 1977825, US 2008/0234402, EP 0656382 B1, US 2007/0282026 A1 und den darin zitierten Patentschriften genannt.

Bevorzugte Mengen an Katalysatoren richten sich nach dem Typ des Katalysators und liegen üblicherweise im Bereich von 0,05 bis 5 pphp (= Massenteile bezogen auf 100 Massenteile Polyol) bzw. 0,1 bis 10 pphp für Kaliumsalze.

### 5. Flammschutzmittel (optional).

Geeignete Flammschutzmittel im Sinne dieser Erfindung sind bevorzugt flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit und Melamin, geeignet.

### 6. Weitere optionale Additive.

Darüber hinaus können weitere Komponenten eingesetzt werden wie beispielsweise Vernetzer, Füllstoffe, Farbstoffe, Antioxidantien und Verdicker / Rheologie-Additive.

### 7. Isocyanate.

Als Isocyanatkomponente sind alle zur Herstellung von Polyurethan-Schäumen, insbesondere Polyurethan- oder Polyisocyanurat-Hartschaumstoffen, geeigneten Isocyanatverbindungen verwendbar. Vorzugsweise weist die Isocyanat-Komponente ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4. Beispiele für geeignete Isocyanate sind in EP 1 712 578 A1, EP 1 161 474, WO 058383 A1, US 2007/0072951 A1, EP 1 678 232 A2 und der WO 2005/085310 genannt.

Das Verhältnis von Isocyanat zu Polyol, ausgedrückt als Index, liegt vorzugsweise im Bereich von 40 bis 500, bevorzugt 100 bis 350. Der Index beschreibt dabei das Verhältnis von tatsächlich eingesetztem Isocyanat zu berechnetem Isocyanat (für eine stöchiometrische Umsetzung mit Polyol). Ein Index von 100 steht für ein molares Verhältnis der reaktiven Gruppen von 1 zu 1.

Das erfindungsgemäße Verfahren zur Herstellung von Polyurethanschäumen, insbesondere Polyurethanhartschäumen, kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine zusammenfassende Darstellung des Stands der Technik, der verwendbaren Rohstoffe und anwendbaren Verfahren findet sich in "Ullmann's Encyclopedia of Industrial Chemistry" Vol. A21, VCH, Weinheim, 4. Auflage 1992, S. 665 bis 715.

Eine bevorzugte Polyurethan- bzw. Polyisocyanurat-Hartschaumformulierung im Sinne dieser Erfindung wird ein Raumgewicht von bevorzugt 20 bis 150 kg/m³ ergeben und hat vorzugsweise die in Tabelle 1 genannte Zusammensetzung, und insbesondere einen Isocyanat-Index: 40 bis 500.

**Tabelle 1: Zusammensetzung einer Polyurethan- bzw. Polyisocyanurat-Hartschaumformulierung**

| Komponente | Gewichtsteile |
|---|---|
| Polyol | 100 |
| Treibmittel | 1 bis 40 |
| Wasser | 0,1 bis 30 |
| Schaumstabilisator | 0,5 bis 5 |
| Amin-Katalysator | 0,05 bis 5 |
| Kalium-Trimerisierungskatalysator | 0 bis 10 |
| Ostwald-Hydrophob | 0,1 bis 10 |
| Flammschutzmittel | |
| | |
| Isocyanat-Index: 40 bis 500 | |

Ein weiterer Gegenstand der vorliegenden Erfindung ist ein Polymerschaum, bevorzugt mit einer durchschnittlichen Zellgröße unter 0,2 mm, vorzugsweise Polyurethan -Schaum, insbesondere Polyurethan-Hartschaum, hergestellt nach einem Verfahren wie zuvor beschrieben.

Ein weiterer Gegenstand der vorliegenden Erfindung ist die Verwendung des erfindungsgemäßen Polymerschaums, erhältlich wie zuvor beschrieben, zur Wärmedämmung, insbesondere bei Kühlgeräten und Bauanwendungen.

### Beispiele

In den nachfolgend aufgeführten Beispielen wird die vorliegende Erfindung beispielhaft beschrieben.

### Vergleichsbeispiel 1: Herstellung eines PU-Hartschaums ohne Maßnahmen zur Vermeidung von Alterungsprozessen, welche nicht durch Koaleszenz, sondern durch Ostwald-Reifung verursacht werden

Zur Beobachtung der Schaumbildung eines PU-Hartschaums wurde ein Digitalmikroskop der Firma Keyence, Modell VHX 2000, ausgerüstet mit einem VH-Z20R/W-Zoom-Objektiv verwendet. Für den Versuch wurde die in der bereits genannten europäischen Patentanmeldung EP15196930.0 beschriebene Durchlicht-Methode gewählt. Hierfür wurde das Objektiv mit Blickrichtung nach oben in die Mikroskop-Einheit eingespannt und unterhalb einer auf einen Stativring aufliegenden Petri-Schale platziert. Als Belichtungsquelle diente ein Lichtleiter, welcher an das Lampenhaus der Mikroskopsteuereinheit angeschlossen wurde. Zum Schutz wurde hierbei das offene Ende des Lichtleiters mit einem Einweg-Schraubdeckelglas mit flachem Boden, ausgerüstet mit Deckel, in welchen eine passende Durchführung eingelassen ist und durch welche der Lichtleiter geführt wird, ummantelt. Die so konstruierte Belichtungsquelle wurde in einem Abstand von ca. 5 mm über dem Boden der Petri-Schale platziert, wobei die Beleuchtungsrichtung von oben nach unten zeigte. Hierbei wurde darauf geachtet, dass der Beleuchtungskegel möglichst genau im Betrachtungskegel des Objektivs lag. Für die Beobachtung des Schaumbildungsvorgangs wurde eine 100-fache Vergrößerung gewählt. Der Fokus des Objektivs wurde so eingestellt, dass er am Boden der Petrischale lag.

Beim verwendeten PU-Schaumsystem handelte es sich um ein einen Cyclopentan-getriebenen PU-Hartschaum, welcher durch Reaktion von 100 Gewichtsteilen eines Polyolgemisches, enthaltend ein aliphatisches Polyetherpolyol (Glycerin/Sorbit-gestartet) mit einer OH-Zahl von 470 mg KOH / g und ein autokatalytisches Polyetherpolyol (o-TDA-gestartet) mit einer OH-Zahl von 460 mg KOH / g im Massenverhältnis 3:2, mit 135 Gewichtsteilen handelsüblichem polymerem Diphenylmethandiisocyanat (pMDI mit einer Viskosität von 200 mPas) hergestellt wurde. Das Polyolgemisch enthielt hierbei - bezogen auf 100 Gewichtsteile des Basispolyols - zusätzlich 2,6 Gewichtsteile Wasser, 1,5 Gewichtsteile des Katalysators Dimethylcyclohexylamin, 1,0 Gewichtsteile des Katalysators Pentamethyldiethylentriamin, 0,5 Gewichtsteile des Katalysators Tris(dimethylaminopropyl)hexahydro-1,3,5-triazin, 2,0 Gewichtsteile des Polyethersiloxan-basierten Schaumstabilisators Tegostab B 8491 der Firma Evonik Industries AG sowie 15,0 Gewichtsteile Cyclopentan. Die Vermischung der Reaktionskomponenten erfolgte im Mischkopf einer Hochdruck-Schäum-Maschine der Firma Krauss-Maffei (RIM-Star MiniDos mit MK12/18ULP-2KVV-G-80-I Mischkopf) bei 150 bar. Direkt nach Austritt aus dem Mischkopf wurden ca. 5 g der Reaktionsmischung in die Petri-Schale des Mikroskopie-Aufbaus gefüllt und für 3 Minuten bei 100-facher Vergrößerung videomikroskopisch nachverfolgt. Bereits bei der qualitativen Betrachtung der Aufnahmen war eine ausgeprägte Alterung durch Ostwald-Reifung, also dem langsamen Verschwinden kleiner Schaumblasen ohne Koaleszenz, zu beobachten. Alterungsphänomene durch Koaleszenz konnten hingegen kaum erkannt werden.

Zur weiteren Betrachtung von Ostwald-Reifung im Verlauf des Schäumprozesses wurde in einem nächsten Schritt das aufgenommen Video im Beobachtungszeitraum von 10 - 110 sec. in gleichmäßigen Zeitintervallen in 19 Einzelbilder zerlegt. In einem nächsten Schritt wurden ausgehend vom letzten Einzelbild nach 110 sec. vier Zellen identifiziert, welche sich möglichst in den vier Ecken des Bildes befanden und während der Verschäumung nicht alterten und somit auf allen Einzelbildern sichtbar waren. Um diese Zellen wurde anschließend in allen Einzelbildern ein Rechteck gespannt, welches das Beobachtungsfenster zum jeweiligen Zeitpunkt darstellt. Durch dieses Vorgehen wurde sichergestellt, dass das Beobachtungsfenster mit etwa der gleichen Rate wächst, wie auch der zu untersuchende PU-Schaum, wodurch Ostwald-Reifung entkoppelt vom Wachstum des Schaums untersucht werden konnte. In einem nächsten Schritt wurden zu jedem Zeitpunkt die Schaumzellen im Beobachtungsfenster gezählt, auf die Größe des Beobachtungsfensters im letzten Einzelbild normiert und anschließend semi-logarithmisch als Funktion der Zeit aufgetragen. Abbildung 1 zeigt das erhaltene Resultat. Wie zu erkennen ist, nimmt die Blasenanzahl mit zunehmende Reaktionszeit stetig ab. Zur mathematischen Modellierung wurden die Daten mit einer e-Funktion der Form *N*(*t*) = (*N*₀-*N*ᵤ)e^{-*kt*} + *N*ᵤ angepasst. Hieraus resultierte eine normierte initiale Blasenanzahl von *N*₀ = 1626,7 mm⁻², eine Alterungsrate von *k* = 0,120 s⁻¹ sowie eine normierte Blasenanzahl des ausgehärteten Schaums von *N*ᵤ = 103,2 mm⁻². Aus diesen Werten lässt sich eine normierte Alterungsrate von *k*ₙₒᵣₘ = 1,16 x 10⁻³ mm²/s ermitteln.

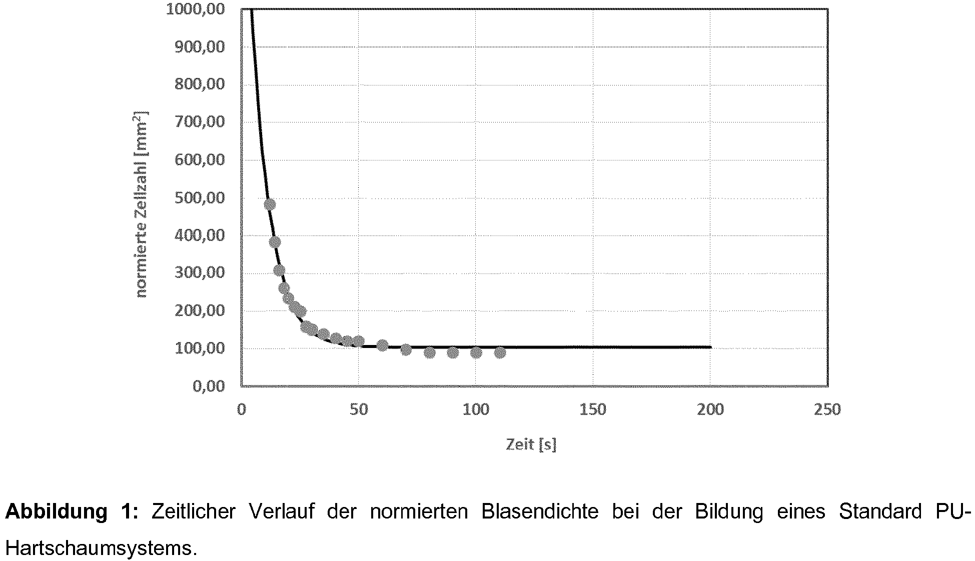

### Erfindungsgemäßes Beispiel 2: Herstellung eines PU-Hartschaums enthaltend Ostwald-Hydrophob

Für diese Versuche wurde das in Vergleichsbeispiel 1 beschriebene Reaktionssystem verwendet, welchem 2 Gewichtsteile Perfluorisohexen beigemengt wurden. Das Perfluorisohexen wurde hierfür zunächst mit Cyclopentan vermischt, anschließend wurde dieses Gemisch wie in Beispiel 1 beschrieben der Polyolphase des Reaktionssystems beigemengt. Die Verschäumung und videomikroskopische Beobachtung des Systems erfolgte ebenfalls analog zu Beispiel 1. Bereits aus der qualitativen Betrachtung der Aufnahmen war eine deutliche Verlangsamung von Alterungsprozessen verglichen zum Perfluorisohexen-freien PU-System zu erkennen. Aus den videomikroskopischen Aufnahmen wurde anschließend wie in Beispiel 1 beschrieben der zeitliche Verlauf der normierten Zellanzahl *N*(*t*) ermittelt. Abbildung 2 zeigt das erhaltene Resultat. Durch mathematische Modellierung der Daten mittels des allgemeinen Ausdrucks *N*(*t*) = (*N*₀-*N*ᵤ)e^{-*kt*} + *N*ᵤ konnte eine normierte initiale Blasenanzahl von *N*₀ = 1473,4 mm⁻², eine Alterungsrate von *k* = 0,162 s⁻¹ sowie eine normierte Blasenanzahl des ausgehärteten Schaums von *N*ᵤ = 295,4 mm⁻² ermittelt werden. Hieraus ergibt sich eine normierte Alterungsrate von *k*ₙₒᵣₘ = 5,48 x 10⁻¹ mm²/s. Vergleichen mit dem Perfluorisohexen-freien PU-System aus Beispiel 1 ist somit eine deutliche Abnahme der normierten Alterungsrate *k*ₙₒᵣₘ zu erkennen, was auf eine verlangsamte Zellalterung zurückzuführen ist. Eine mikroskopische Betrachtung des fertigen Schaums ergab zudem, dass durch die verminderte Zellalterungsrate die durchschnittliche Größe der Schaumzellen signifikant abnahm. Sie lag unter 0,2 mm.

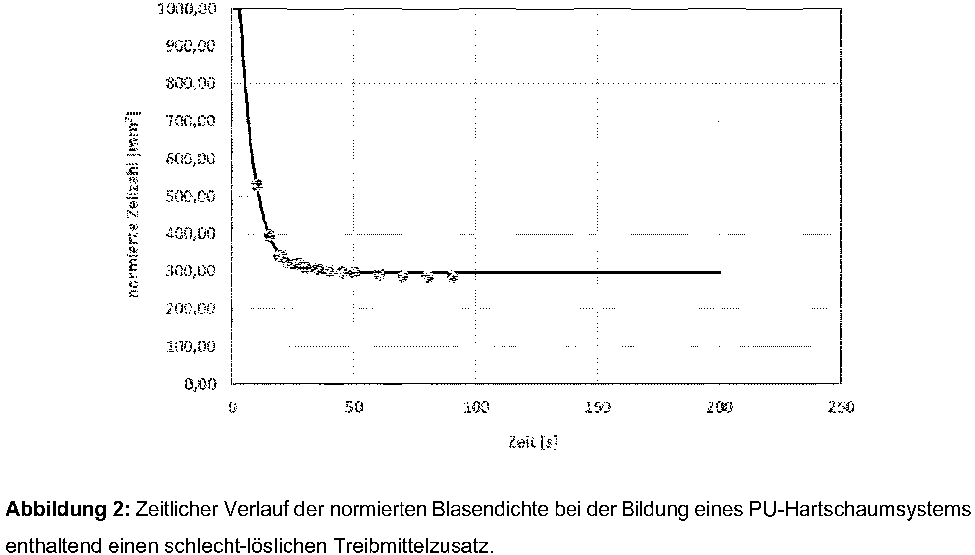

## Patentansprüche

1. Verfahren zur Herstellung von Polymerschäumen, vorzugsweise Polyurethan-Schaum, insbesondere Polyurethan-Hartschaum, aus flüssigen Reaktionsmischungen, **dadurch gekennzeichnet, dass** es in Gegenwart eines Zusatzstoffes zur Verlangsamung der Zellalterung durchgeführt wird.

2. Verfahren nach Anspruch 1, **dadurch gekennzeichnet, dass** die normierte Alterungsrate *k*ₙₒᵣₘ, bestimmbar wie hierin beschrieben, ≤ 1,0 x 10⁻³ mm²/s, bevorzugt ≤ 0,9 x 10-³ mm²/s, besonders bevorzugt ≤ 0,8 x 10⁻³ mm²/s, beträgt.

3. Verfahren nach Anspruch 1 oder 2, **dadurch gekennzeichnet, dass** die Gesamtmenge an eingesetztem Zusatzstoff zur Verlangsamung der Zellalterung von 0,0001 bis maximal 5 Massen-%, bevorzugt maximal 3 Massen-%, besonders bevorzugt maximal 1.5 Massen-% bezogen auf die Gesamtmasse der Schaumstoff-Rezeptur inklusive der Treibmittel, beträgt.

4. Verfahren nach einem der Ansprüche 1 bis 3, **dadurch gekennzeichnet, dass** die normierte Alterungsrate *k*ₙₒᵣₘ ,bestimmbar wie hierin beschrieben, um mindestens 20 %, bevorzugt um mindestens 30 %, besonders bevorzugt um mindestens 50 %, gemessen gegenüber dem Wert von *k*ₙₒᵣₘ desselben Herstellverfahrens ohne Zusatz der Zusatzstoffe zur Verlangsamung der Zellalterung, reduziert wird.

5. Verfahren nach einem der Ansprüche 1 bis 4, **dadurch gekennzeichnet, dass** der Zusatzstoff zur Verlangsamung der Zellalterung ein Ostwald-Hydrophob umfasst, welches sich dadurch auszeichnet, dass es unter Normbedingungen einen Siedepunkt kleiner 150 °C aufweist und vorzugsweise schlecht in der flüssigen Schaummatrix löslich ist, in dem Sinne, dass solche Substanzen bei einer verwendeten Einsatzkonzentration von maximal 5 Massen-%, bevorzugt maximal 3 Massen-%, besonders bevorzugt maximal 1,5 Massen-% zu einer mit dem Auge sichtbaren Trübung und/oder Phasenseparation führen, wobei dieses Kriterium im Falle von Schaumstoffen, die durch Verschäumung mehr-komponentiger Reaktivsysteme hergestellt werden, vorzugsweise unabhängig für alle Einzelkomponenten gilt, insbesondere ist das Ostwald-Hydrophob im Falle eines Polyurethan-Systems bevorzugt sowohl im Polyol-Gemisch, entspricht A-Komponente, als auch im Isocyanat, entspricht B-Komponente, schlecht löslich.

6. Verfahren nach einem der Ansprüche 1 bis 5, **dadurch gekennzeichnet, dass** der Zusatzstoff zur Verlangsamung der Zellalterung, insbesondere das Ostwald-Hydrophob, ausgewählt ist fluorierten Kohlenwasserstoffen, Ethern und/oder Ketonen, bei denen mindestens 50 %, bevorzugt mindestens 80 %, besonders bevorzugt 100 % der Wasserstoffe durch Fluor-Atome ersetzt sind, wobei diese Verbindungen gesättigt oder ungesättigt sowie linear, verzweigt oder cyclisch sein können.

7. Verfahren nach Anspruch 6, **dadurch gekennzeichnet, dass** der Zusatzstoff zur Verlangsamung der Zellalterung, insbesondere das Ostwald-Hydrophob, ausgewählt ist aus perfluorierten Kohlenwasserstoffen, besonders bevorzugt Perfluorpentan C₅F₁₂, Perfluorhexan C₆F₁₄, Perfluorcyclohexan C₆F₁₂, Perfluorheptan C₇F₁₆, Perfluoroctan C₈F₁₈, Olefine mit den Summenformeln C₅F₁₀, C₆F₁₂, C₇F₁₄ und/oder C₈F₁₆, ganz besonders bevorzugt das Dimere des 1,1,2,3,3,3-Hexafluor-1-propen, insbesondere 1,1,1,2,3,4,5,5,5-nonafluor-4-(trifluormethyl)pent-2-en oder 1,1,1,3,4,4,5,5,5-nonafluor-2-(trifluormethyl)pent-2-en und/oder Mischungen davon.

8. Verfahren nach einem der Ansprüche 1 bis 7, **dadurch gekennzeichnet, dass** der Zusatzstoff zur Verlangsamung der Zellalterung, insbesondere das Ostwald-Hydrophob, ausgewählt ist aus Fluorkohlenwasserstoffen mit Olefinfunktion, vorzugsweise C₄H₂F₆, Hexafluorisobutylen, C₅H₂F₈, C₆H₂F₁₀, C₇H₂F₁₂ und/oder C₈H₂F₁₄, sowie Olefine mit der allgemeinen Formel
H₂C=CH-R^{F}
mit R^{F} gleich einem monovalenten, perfluorierten, gesättigten organischen Rest.

9. Verfahren nach einem der Ansprüche 1 bis 8, **dadurch gekennzeichnet, dass** der Zusatzstoff zur Verlangsamung der Zellalterung, insbesondere das Ostwald-Hydrophob, ausgewählt ist aus Ethern mit einem oder zwei perfluorierten Resten, besonders bevorzugt Verbindungen der allgemeinen Formel
R-O-R^{F}
mit R^{F} gleich einem monovalenten, perfluorierten, gesättigten organischen Rest, bevorzugt-C₃F₇, -C₄F₉, -C₅F₁₁, -C₆F₁₃ und/oder -C₇F₁₅,
R gleich einem monovalenten, gesättigten Kohlenwasserstoff-Rest, bevorzugt Methyl- oder EthylRest,
oder
R^{F}-O-CF=CF₂
mit R^{F} gleich einem monovalenten, perfluorierten, gesättigten organischen Rest, bevorzugt-CF₃ und/oder -C₂F₅.

10. Verfahren nach einem der Ansprüche 1 bis 9, **dadurch gekennzeichnet, dass** der Zusatzstoff zur Verlangsamung der Zellalterung, insbesondere das Ostwald-Hydrophob, ausgewählt ist aus Ketonen mit zwei perfluorierten Resten, besonders bevorzugt 1,1,1,2,2,4,5,5,5-Nonafluoro-4-(trifluoromethyl)-3-pentanon.

11. Verfahren nach einem der Ansprüche 1 bis 10, **dadurch gekennzeichnet, dass** der Zusatzstoff zur Verlangsamung der Zellalterung, insbesondere das Ostwald-Hydrophob, ausgewählt ist aus Silanen und/oder Siloxanen, welche Methyl- oder höhere Kohlenwasserstoff-Substituenten tragen, die gesättigt oder ungesättigt, linear, verzweigt oder cyclisch, sowie nicht, teilweise oder vollständig halogeniert, insbesondere fluoriert, sein können,
wobei die folgenden bevorzugt sind:
i) Tetramethylsilan und davon abgeleitete Verbindungen der allgemeinen Formel
(CH₃)₃Si-R
mit R gleich -H, Ethyl-, Vinyl-, Allyl-, Chlormethyl-, Bromomethyl-, Methoxymethyl-, Trifluormethyl- oder Methoxy-.
ii) Hexamethyldisilan, Tetraethylsilan,Trifluormethyl-triethylsilan und/oder Trivinylsilan.
iii) Hexamethyldisiloxan und davon abgeleitete Verbindungen der allgemeinen Formel R-(CH₃)₂Si-O-Si(CH₃)₂-R
mit R gleich -H, Ethyl-, Vinyl-, Allyl-, Chlormethyl-, Bromomethyl-, Methoxymethyl-, Trifluormethyl- oder Methoxy-.
iv) Octamethyltrisiloxan und/oder Heptamethyltrisiloxan (CH₃)₃Si-O-Si(CH₃)H-O-Si(CH₃)₃.

12. Verfahren nach einem der Ansprüche 1 bis 11, **dadurch gekennzeichnet, dass** der Schaum ein Polyurethan-Schaum, insbesondere Polyurethan -Hartschaum ist und durch Umsetzung einer oder mehrerer Polyolkomponenten mit einer oder mehrerer Isocyanatkomponenten resultiert, vorzugsweise in Gegenwart von wenigstens einem Urethan- und/oder Isocyanurat-Katalysator sowie wenigstens einem Treibmittel.

13. Polymerschaum, bevorzugt mit einer durchschnittlichen Zellgröße unter 0,2 mm, vorzugsweise Polyurethan -Schaum, insbesondere Polyurethan-Hartschaum, hergestellt nach einem Verfahren gemäß einem der Ansprüche 1 bis 12.

14. Verwendung des Polymerschaums nach Anspruch 13 zur Wärmedämmung.
